# EUROPÄISCHE PATENTSCHRIFT

(11) **EP 0 787 423 B1**
(45) Veröffentlichungstag und Bekanntmachung des Hinweises auf die Patenterteilung: **10.05.2000**
(21) Anmeldenummer: 97100732.3
(22) Anmeldetag: 17.01.1997
(51) Int. Cl.: A01D 34/71

(54) **Mähwerksgehäuse und Gebläse**
Mower housing and blower
Carter de tondeuse et dispositif soufflant

(30) Priorität: 02.02.1996 US 595686
(43) Veröffentlichungstag der Anmeldung: 06.08.1997
(73) Patentinhaber: DEERE & COMPANY, Moline, Illinois 61265-8098 (US)
(72) Erfinder: Bening, Curtis Reinhard, Beaver Dam, Wisconsin 53916 (US); Trefz, Harlin James, Jackson, Tennessee 38305 (US)
(74) Vertreter: Feldmann, Bernhard

(56) Entgegenhaltungen:
- FR-A- 2 108 333
- FR-A- 2 732 546
- GB-A- 2 223 660
- US-A- 4 010 518
- US-A- 4 735 037
- US-A- 5 240 461
- PATENT ABSTRACTS OF JAPAN vol. 013, no. 211 (C-597), 17.Mai 1989 & JP 01 030509 A (KUBOTA LTD), 1.Februar 1989,
- PATENT ABSTRACTS OF JAPAN vol. 017, no. 333 (C-1074), 24.Juni 1993 & JP 05 038219 A (ISEKI & CO LTD), 19.Februar 1993,

## Beschreibung

Die Erfindung bezieht sich auf ein Mähwerksgehäuse und Gebläse, das am Mähwerksgehäuse horizontal schwenkbar anschließbar ist, mit einer vom Mähwerksgehäuse aus über einen Riementrieb antreibbaren Komponente versehen ist, zwischen einer Betriebsstellung am Mähwerksgehäuse und einer zweiten vom Mähwerksgehäuse weggeschwenkten Stellung verstellbar ist und in der Betriebsstellung verriegelbar ist.

Eine derartige Gerätekombination ist aus dem Dokument US-A-5 240 461 bekannt. Hierbei ist normalerweise ein Mähwerk unter einem Räsentraktor aufgehängt, wobei das Mähwerk das geschnittene Gut seitlich ausbläst. Soll das Gut dann nicht auf den zuvor geschnittenen Rasen abgelegt werden, so ist es zu sammeln, beispielsweise in einem an dem Rasentraktor angebauten oder von diesem mitgeführten Container. In diesen gelangt das Gut durch ein Entleerrohr, das sich an ein Gebläse anschließt, das seinerseits an der Auswurföffnung des Mähers vorgesehen ist. In der Regel wird das zum Gebläse gehörige Gebläserad von einer Antriebsscheibe am Mähwerk aus über einen Riemen angetrieben. Die Riemenspannung wird über eine Spannscheibe aufrechterhalten.

Die Spannscheibe selbst wird bei Betätigung eines Handhebels, über den eine Verriegelung für das Gebläse gelöst wird, derart verstellt, daß der Riemen nicht mehr gespannt ist und von der Antriebsscheibe abgenommen werden kann. Der Riemen muß abgenommen werden, wenn das Gebläse in seine zweite Stellung verschwenkt wird, da sich die Anlenkstelle des Gebläses an einem Ende des Gebläsegehäuses befindet und der Riemen am anderen Ende des Gebläsegehäuses in dieses geführt ist. Soll nun das Gebläsegehäuse gereinigt werden, muß zunächst der Riemen entfernt werden, damit das Gebläse in seine zweite Stellung verstellbar ist. Bei Arbeiten in nassem oder langem Gras neigen derartige Mäher leicht zu Verstopfungen, die behoben werden müssen. Das Gebläse muß entriegelt und in seine zweite Stellung verbracht werden.

Das Entriegeln soll in einfacher Weise erfolgen können, wobei das Gebläse nach einem weiteren Aspekt der Erfindung auch leicht abgenommen werden kann. Hierzu sieht die Erfindung vor, daß die Verriegelungsvorrichtung einen federnden Arm aufweist, der mit einem Fanghaken verspannbar ist. In einfacher Weise ist dabei der Arm zwischen seinen Enden an dem Gebläsegehäuse schwenkbar gelagert, wobei der Fanghaken am Gebläsegehäuse angeordnet und am Mähwerksgehäuse eine Öse vorgesehen ist, in die in der Betriebsstellung das eine Ende des Armes, das als Hakenteil ausgebildet ist, eingreift. Durch diese Maßnahmen ist eine besonders einfache und leicht zu betätigende Verriegelung geschaffen. Bei einem Lösen der Verriegelung verbleiben alle Teile bis auf die Öse an dem Gebläsegehäuse. Ein leichter Abbau des Gebläsegehäuses ist dadurch möglich, was auch noch dadurch unterstützt wird, daß das Gebläsegehäuse in einem der Verriegelung abgelegenen Bereich mit einer Hülse versehen ist, die auf einen Tragzapfen an dem Mähwerksgehäuse aufsteckbar ist. Im einzelnen ist mit Bezug auf die Fahrtrichtung das Gebläsegehäuse im Bereich seines rückwärtigen Endes mit dem Mähwerksgehäuse schwenkbar verbunden, wobei die Verriegelung am frontseitigen Ende vorgesehen ist.

In der Zeichnung ist ein nachfolgend näher erläutertes Ausführungsbeispiel der Erfindung dargestellt. Es zeigt:
- Fig. 1: ein an ein Mähwerksgehäuse angeschlossenes Gebläse in perspektivischer Darstellung,
- Fig. 2: eine schematische Darstellung des Gebläses in seiner Betriebsstellung mit gespanntem Antriebsriemen,
- Fig. 3: das Gebläse in seiner entriegelten Wartungsstellung und entspanntem Riemen,
- Fig. 4: das Gebläse in seiner Wartungsstellung mit gespanntem Riemen,
- Fig. 5: das Gebläse in Seitenansicht und entspanntem Riemen,
- Fig. 6: eine Lasche mit einer schlüssellochähnlichen Öffnung zum Feststellen der Spannscheibe und
- Fig. 7: die Lasche nach Fig. 6 in Seitenansicht.

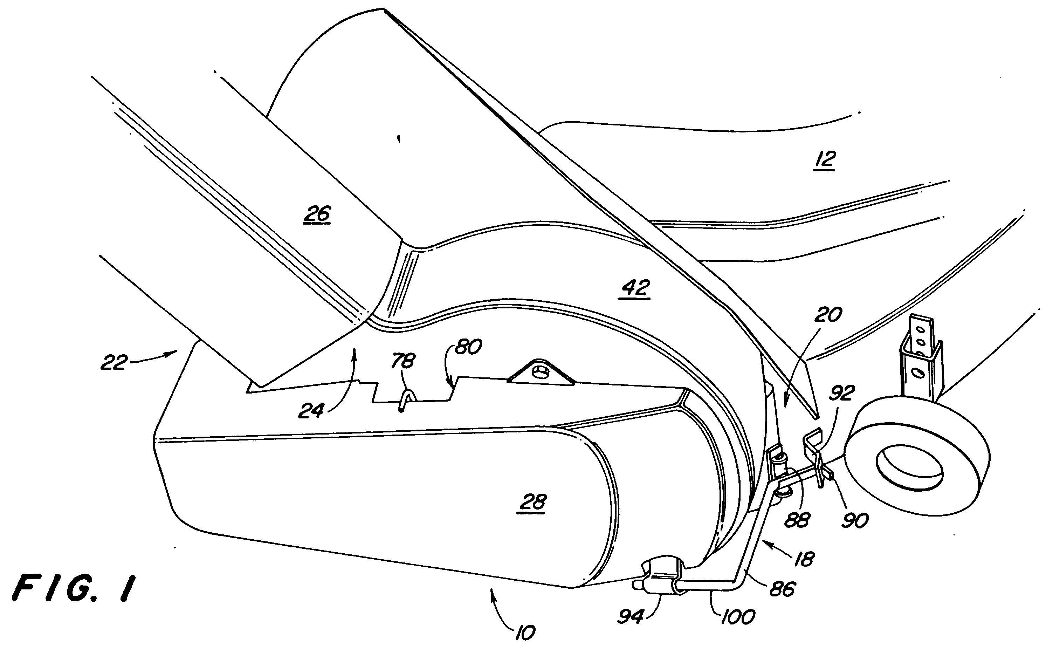

In Fig. 1 der Zeichnung ist in perspektivischer Darstellung ein schwenkbares Gebläse 10 zu erkennen, das an einem Mähwerksgehäuse 12 angeschlossen ist. Die Einlassöffnung 14 des Gebläses 10 wird mit der Auslassöffnung 16 des Mähwerksgehäuses 12 in der Betriebsstellung in Deckung gebracht, wobei das Mähwerksgehäuse in typischer Weise unterhalb eines Kleintraktors oder unterhalb eines ähnlichen Fahrzeugs angebracht ist.

Das Gebläse 10 kann an das Mähwerksgehäuse 12 lösbar angeschlossen werden und weist eine Verriegelung 18 an seinem vorderem Ende 20 auf, über die das Gebläse 10 mit dem Mähwerksgehäuse 12 verriegelt werden kann. An seinem rückwärtigen Ende 22 ist das Gebläse 10 mit einem Auslass 24 versehen, an dem ein Entleerrohr 26 anschließbar ist, über das von dem Gebläse 10 gefördertes Gut in einen von dem Kleinschlepper gezogenen Sammelwagen gelangen kann. Anstelle des Sammelwagens kann natürlich auch ein Sammelbehälter an die Rückseite des Traktors angeschlossen sein. Das Gebläse 10 ist an seiner Außenseite noch mit einem Deckel oder einer Verkleidung 28 ausgestattet, die zum Abdecken und zum Schutz von dort vorgesehenen Antriebskomponenten dient.

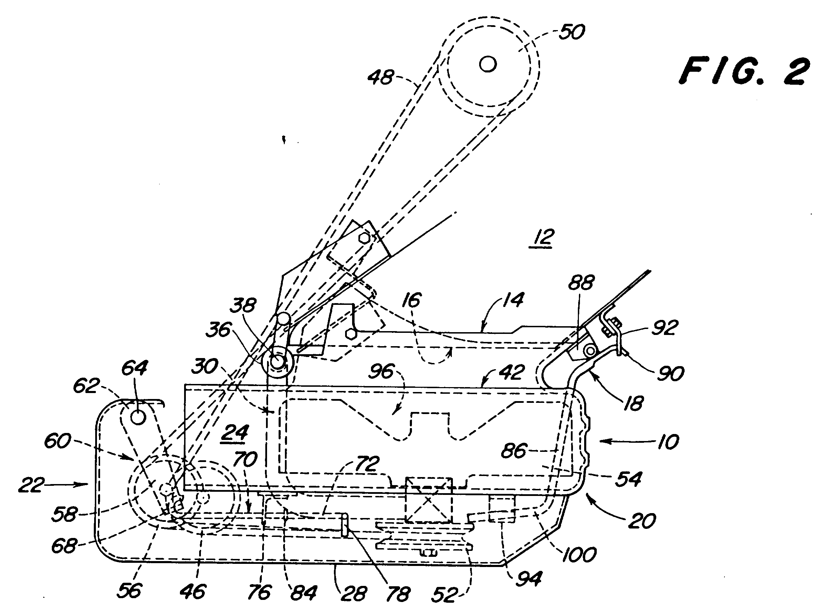

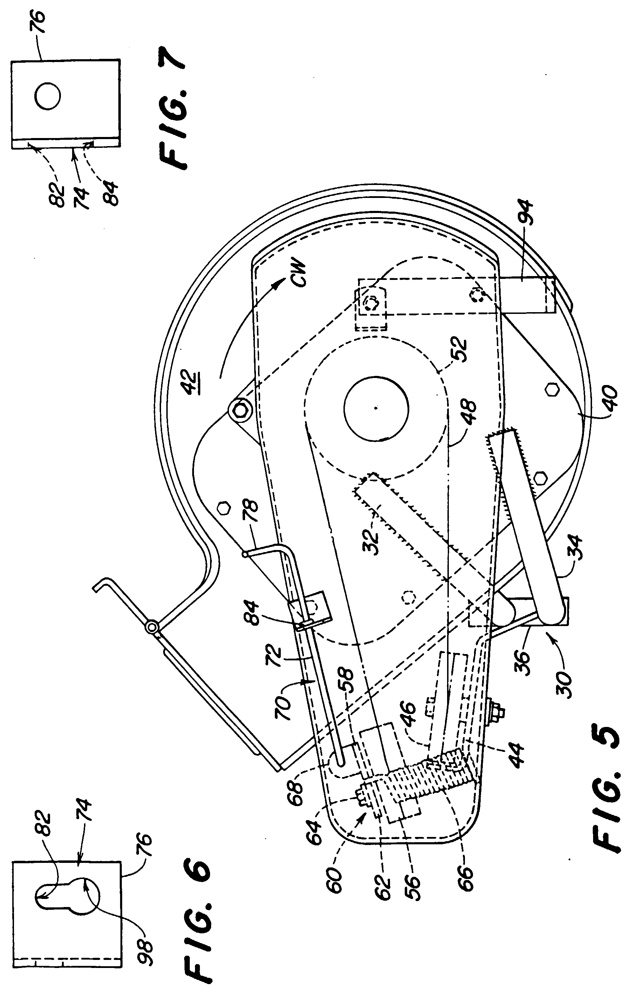

Die Fig. 2 bis 4 zeigen das Gebläse in verschiedenen Stellungen von oben gesehen, wobei Fig. 2 die geschlossene Stellung zeigt. Man erkennt dort einen zum Anschluß an das Mähwerksgehäuse dienenden Rahmenteil 30 mit zwei Tragschenkeln 32 und 34 und einer Hülse 36 (siehe Fig. 5). Über die Hülse wird der Rahmenteil mit dem Mähwerksgehäuse schwenkbar verbunden, wozu die Hülse 36 auf einen auf dem Mähwerksgehäuse 12 vorgesehenen Tragzapfen 38 aufgesteckt wird. Der L-förmig ausgestaltete Rahmenteil 30 ist mit einer Platte 40 verbunden, beispielsweise verschweißt, die ihrerseits das Gebläsegehäuse 42 trägt.

Aus Fig. 5 ist ferner zu erkennen, daß der Rahmenteil 30 noch mit einem Ausleger 44 versehen ist, der eine Riemenscheibe 46 trägt, die zur Richtungsänderung eines Antriebsriemens 48 dient, wenn dieser vom Mähwerksdeck kommend zu einer Riemenscheibe 52 umgelenkt wird, die mit dem Gebläserad 54 antriebsmäßig verbunden ist.

Eine Spannscheibe 56 ist außerdem noch am äußeren Ende des Auslegers 44 gelagert. Die Spannscheibe 56 wird von dem einen Endteil 58 eines Hebelteils 60 aufgenommen, dessen anderer Endteil 62 mit einem Schwenkteil 64 verbunden ist, der auf dem Ausleger 44 gelagert ist. Eine Feder 66 versucht den Hebelteil mit Bezug auf Fig. 2 im Uhrzeigersinn zu drehen und damit auch die Spannscheibe in derselben Drehrichtung um die Achse des Schwenkteils 64.

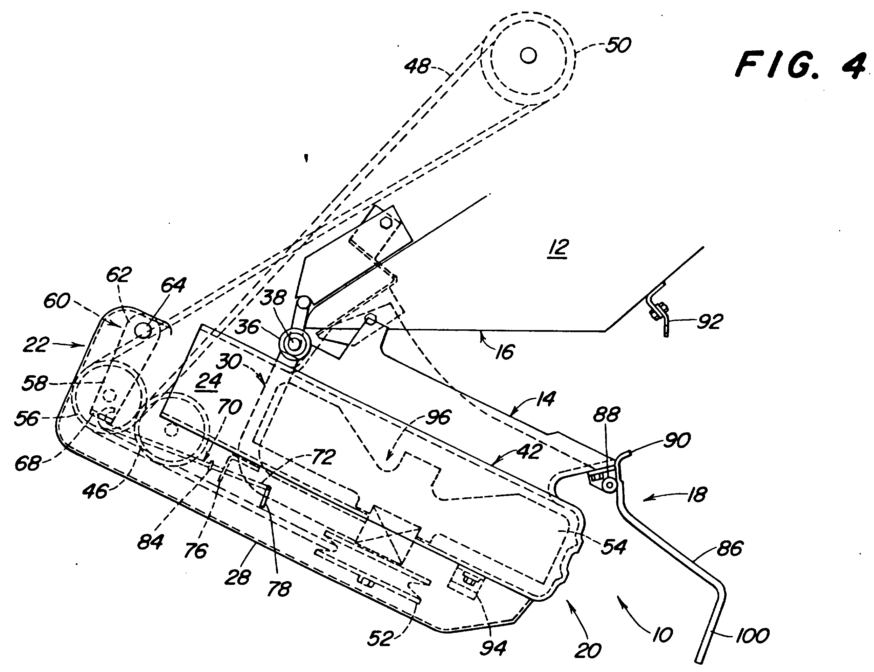

Aus Fig. 4 ist zu erkennen, daß der Hebelteil 60 an seinem Endteil 58 noch mit einer abstehenden Öse 68 versehen ist, die eine Öffnung aufweist. Ein Schiebeteil 70, zu dem eine Stange 72 gehört, ist mit seinem einen Ende in dieser Öffnung verankert. Die Stange 72 ist in einem Schlitz 74 in einer Lasche 76 verstellbar, die am besten aus den Fig. 6 und 7 zu ersehen ist. Die Stange 72 ist an ihrem anderen Ende mit einem nach oben abstehenden Handgriff 78 versehen, der durch eine aus Fig. 1 erkennbare Öffnung 80 in der Verkleidung 28 herausragt. Der Schlitz 74 ist schlüssellochähnlich ausgebildet und damit mit einem dünneren oberen Abschnitt 82 ausgestattet, durch den die Stange 72 ebenfalls hindurchtreten kann. Die Stange ist noch mit einem Anschlag 84 versehen, der die Stange umgibt und einen Außendurchmesser aufweist, der größer ist als die Schlitzbreite in dem Abschnitt 82. Über die Feder 66 kann der Anschlag gegen die Lasche 76 gezogen werden, deren Schlitzöffnung im unteren Bereich derart ist, daß sie den Anschlag durchtreten lässt.

Die am vorderen Ende 20 des Gebläses vorgesehene Verriegelung 18 besteht beim bevorzugten Ausführungsbeispiel im wesentlichen aus einer federnden Metalstange 86 in Form eines mehrmals gebogenen Armes. Aus den Fig. 1, 2 und 3 ist zu ersehen, daß die Stange 86 an der Stelle 88 schwenkbar mit dem Gebläsegehäuse 42 verbunden ist und an ihrem vorderen oder dem Mähwerksgehäuse zugelegenen Ende einen Hakenteil 90 aufweist, der in die Öffnung einer Öse 92 eingreifen soll, die am Mähwerksgehäuse 12 vorgesehen ist. Das andere Ende der Metalstange 86 ist lang genug und damit auch flexibel genug, um in die Fangausnehmung eines nach unten vorstehenden Fanghakens 94 gesteckt zu werden, der seinerseits am Gebläsegehäuse 42 vorgesehen ist. Damit ist die Verriegelung um das vordere Ende des Gebläses geführt.

In der Betriebsstellung des Gebläses 10 ist, wie aus Fig. 1 zu erkennen ist, das Gebläse mit dem Auslaß 16 des Mähwerksgehäuses verbunden, was am vorderen Ende 20 über die Verriegelung 18 erfolgt.

Während des Einsatzes wird das durch die im Mähwerksgehäuse umlaufenden Messer geschnittene Gut durch die Auslassöffnung 16 im Mähwerksgehäuse in die Einlassöffnung 14 im Gebläse 10 geschleudert und in den Gebläseradraum 96 des Gebläses gelangen, wo es durch die Umlaufbewegung des mit Bezug auf Fig. 5 im Uhrzeigersinn umlaufenden Gebläserades durch den Auslass 24 des Gebläses weiter gefördert wird.

Der das Gebläserad 54 antreibende Riemen 48 wird von der Antriebsriemenscheibe 50, die auf der Oberseite des Mähwerksgehäuses vorgesehen ist, aus angetrieben. Der Riemen 48 ist dann um die den Riemen umlenkende Riemenscheibe 46 geführt, die an dem rückwärtigen Ende 22 des Gebläses vorgesehen ist, und weiter um die Riemenscheibe 52 am Gebläserad und zurück und um die Spannscheibe 56 bis schließlich zur Antriebsriemenscheibe.

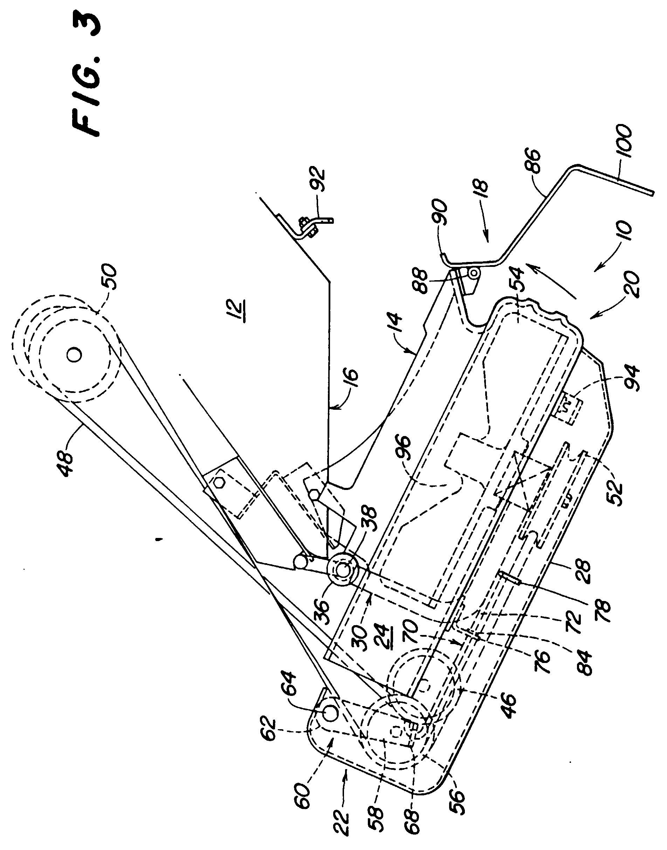

Die für den Antrieb des Gebläserades erforderliche Riemenspannung wird durch die Spannscheibe erzeugt, die mit Bezug auf die Fig. 2 und 3 über die Feder 66 im Uhrzeigersinn um ihre Drehachse oder ihren Schwenkteil 64 drehen will. Im betrieblichen Einsatz und bei gespanntem Riemen befindet sich die Stange 72 in dem unteren und größeren Lochbereich 98 des Schlitzes 74 in der Lasche 76, wobei, wie aus Fig. 4 zu ersehen ist, sich der Anschlag 84 links von der Lasche 76 befindet.

Sollte nun der Rasenmäher in seinem Einsatz auf nasses oder zu langes Gras treffen oder andere Bedingungen vorfinden, die eine Verstopfung verursachen oder den Gutfluss durch das Gebläse 10 behindern, so muß die Bedienungsperson den Kleintraktor zum Reinigen des Gebläses zunächst anhalten und den Antrieb zu dem Gebläse unterbrechen. Aus Sicherheitsgründen ist auch der Antrieb zu dem Mähwerk zu unterbrechen. Danach kann die Bedienungsperson das Gebläse in eine offene oder für die Bedienungsperson zugängliche Stellung, wie sie aus Fig. 3 zu erkennen ist, verschwenken. Um dies tun zu können, löst die Bedienungsperson zunächst den Handgriff 100 der Metalstange 86 von dem Fanghaken 94, indem sie den Handgriff nach innen und dann nach unten drückt. Wenn die Metallstange aus ihrer Stellung in Fig. 2 in ihre Stellung nach Fig. 3 verstellt wird, tritt auch der Hakenteil 90 am anderen Ende der Metallstange aus der Öffnung in der Öse 92 am Mähwerksgehäuse 12 aus. Das vordere Ende 20 des Gebläses 10 kann dann um die Achse des Tragzapfens 38 in die Stellung nach Fig. 3 verschwenkt werden, in der das Innere der Gebläsekammer 96 des Gebläses oder der Auslass 16 des Mähwerksgehäuses gut zugänglich sind.

Will die Bedienungsperson auch noch für die Reinigungsarbeiten den Antriebsriemen entspannen, so verstellt sie die Stange 72 aus der großen Schlitzöffnung 98 in den schmaleren oberen Teil 82 des Schlitzes 74 in der Lasche 76. Da die Stange 72 mit dem Hebelteil 60, der infolge der Federwirkung im Uhrzeigersinn drehen will, verbunden ist, wird sie durch den Hebelteil entsprechend verstellt. Andererseits ist es aber auch möglich, daß die Bedienungsperson eventuell nach dem Öffnen des Gebläses die Stange aus ihrer Stellung nach Fig. 4 in ihre Stellung nach Fig. 5 verstellt, indem sie den Handgriff 78 nach vorne zieht, wobei der Anschlag 84 durch die große Schlitzöffnung 98 in der Lasche 76 durchtritt. Danach wird die Stange in den oberen und schmaleren Abschnitt 82 des Schlitzes 74 verstelllt, wonach die auf den Hebelteil wirkende Feder 66 den Anschlag 84 gegen die Lasche zur Anlage ziehen kann.

Aus dem Vorstehenden ergibt sich somit, daß sich die Kombination von Gebläse und Mähwerk auch bei langem oder nassem Gras einsetzen lässt, wo öfters Verstopfungen zu befürchten sind. Da das Gebläse mit dem Mähwerksgehäuse an seinem rückwärtigen linken Ende horizontal schwenkar verbunden ist und an seinem vorderen Ende über einen Schnellverschluß mit dem Mähwerksgehäuse verriegelbar ist, lässt es sich bei Verstopfungen zu Reinigungszwecken leicht öffnen. Der Antriebsriemen ist leicht zu entspannen und kann, falls dies gewünscht wird, auch dann leicht entfernt werden. Entsprechendes gilt auch für den Abbau des gesamten Gebläses, da dieses lediglich auf den Tragzapfen 38 aufgesteckt ist.

## Patentansprüche

1. Mähwerksgehäuse und Gebläse, das am Mähwerksgehäuse (12) horizontal schwenkbar anschließbar ist, mit einer vom Mähwerksgehäuse (12) aus über einen Riementrieb antreibbaren Komponente versehen ist, zwischen einer Betriebsstellung am Mähwerksgehäuse (12) und einer zweiten vom Mähwerksgehäuse (12) weggeschwenkten Stellung verstellbar ist und in der Betriebsstellung verriegelbar ist, dadurch gekennzeichnet, daß die Verriegelungsvorrichtung (18) einen federnden Arm (86) aufweist, der mit einem Fanghaken (94) verspannbar ist.

2. Kombination nach Anspruch 1, dadurch gekennzeichnet, daß der Arm (86) zwischen seinen Enden an dem Gebläsegehäuse (42) schwenkbar gelagert ist, wobei der Fanghaken (94) am Gebläsegehäuse (42) angeordnet und am Mähwerksgehäuse (12) eine Öse (92) vorgesehen ist, in die in der Betriebsstellung das eine Ende des Armes, das als Hakenteil (90) ausgebildet ist, eingreift.

3. Kombination nach Anspruch 1, dadurch gekennzeichnet, daß das Gebläsegehäuse (42) in einem der Verriegelung abgelegenen Bereich mit einer Hülse (36) versehen ist, die auf einen Tragzapfen (38) an dem Mähwerksgehäuse (12) aufsteckbar ist.

4. Kombination nach einem oder mehreren der vorstehenden Ansprüche, dadurch gekennzeichnet, daß mit Bezug auf die Fahrtrichtung das Gebläsegehäuse (42) im Bereich seines rückwärtigen Endes mit dem Mähwerksgehäuse (12) schwenkbar verbunden ist, wobei die Verriegelung am frontseitigen Ende vorgesehen ist.

## Claims

1. A mower housing and blower, which can be attached to the mower housing (12) to swing horizontally, is provided with components which can be driven from the mower housing (12) by a belt drive, can be moved between an operating position on the mower housing (12) and a second position swung away from the mower housing (12), and can be fastened in the operating position, characterized in that the fastening device (18) comprises a sprung arm (86), with can be tensioned by a catch hook (94).

2. A combination according to claim 1, characterized in that the arm (86) is pivotally mounted on the blower housing (42) between its ends, the catch hook (94) being arranged on the blower housing (42) and an eye (92) being provided on the mower housing (12), in which the one end of the arm, which is formed as a hook part (90), engages in the operating position.

3. A combination according to claim 1, characterized in that the blower housing (42) is provided with a sleeve (36) in a region remote from the fastening, which sleeve can be pushed on to a support pin (38) on the mower housing (12).

4. A combination according to one or more of the preceding claims, characterized in that the blower housing (42) is pivotally connected to the mower housing (12) in the region of its rear end, relative to the direction of travel, while the fastening is provided at the front end.

## Revendications

1. Carter d'unité de coupe et soufflante, qui peut être raccordée au carter (12) de l'unité de coupe de manière à pouvoir pivoter horizontalement, est équipée d'un composant qui peut être entraîné à partir du carter (12) de l'unité de coupe par l'intermédiaire d'un système d'entraînement à courroie, est déplaçable entre une position de fonctionnement au carter (12) de l'unité de coupe et une seconde position écartée, par pivotement, du carter (12) de l'unité de coupe et peut être verrouillée dans la position de fonctionnement, caractérisé en ce que le dispositif de verrouillage (18) comporte un bras élastique (86), qui peut être serré par une partie formant crochet de retenue (94).

2. Combinaison selon la revendication 1, caractérisée en ce que le bras (86) est monté entre ses extrémités sur le carter (42) de la soufflante de manière à pouvoir pivoter, la partie formant crochet de retenue (94) étant disposée sur le carter (42) de la soufflante, et que sur le carter (42) de la soufflante est prévu un oeillet (92), dans lequel s'engage, dans la position de fonctionnement, une extrémité du bras qui est agencée sous la forme d'un crochet (90).

3. Combinaison selon la revendication 1, caractérisée en ce que le carter (42) de la soufflante est équipée, dans une partie éloignée du dispositif de verrouillage, une douille (36), qui peut être emmanchée sur un téton de support (38) au carter (12) de l'unité de coupe.

4. Combinaison selon une ou plusieurs des revendications précédentes, caractérisée en ce que, par rapport à la direction de course, le carter (42) de la soufflante est relié de manière à pouvoir pivoter, au niveau de son extrémité arrière, au carter (12) de l'unité de coupe, le dispositif de verrouillage étant prévu sur l'extrémité avant.
